(19) Europäisches Patentamt
European Patent Office
Office européen des brevets

(11) Publication number: **0 358 224 A2**

# (12) EUROPEAN PATENT APPLICATION

(21) Application number: 89116650.6

(51) Int. Cl.[5]: G06F 15/40

(22) Date of filing: 08.09.89

(30) Priority: 09.09.88 JP 224809/88

(43) Date of publication of application: 14.03.90 Bulletin 90/11

(84) Designated Contracting States: DE FR GB

(71) Applicant: KABUSHIKI KAISHA TOSHIBA
72, Horikawa-cho Saiwai-ku
Kawasaki-shi Kanagawa-ken 210(JP)

(72) Inventor: Sekido, Kazunori
203 Yanagisawaso 3-7-5 Seya Seya-ku
Yokohama-shi Kanagawa-ken(JP)

(74) Representative: Lehn, Werner, Dipl.-Ing. et al
Hoffmann, Eitle & Partner Patentanwälte
Arabellastrasse 4
D-8000 München 81(DE)

## (54) Semiconductor disk device useful in transaction processing system.

(57) A semiconductor disk device useful in a transaction processing system, capable of reducing the turnaround time for the transaction. The semiconductor disk device includes device (31, 33, 35, 37) for generating a journal information when new data to be stored in the semiconductor disk device are written in particular addresses in the semiconductor memory (19), the journal information including the new data and old data which have originally been stored in these particular addresses in the semiconductor memory (18) before the new data are written.

FIG.3
EXTERNAL MEMORY
1
37
JOURNAL CONTROL UNIT
MPX
35
13
CONTROL UNIT
31
33
NEW DATA BUFFER
OLD DATA BUFFER
11
TRANSFER CONTROLLER
3
17
ADDRESS REGISTER
19
SEMICONDUCTOR DISK CONTROLLER
BL
15
DATA BUFFER
SEMICONDUCTOR MEMORY
23
21
HD
DC
SEMICONDUCTOR DISK DEVICE

EP 0 358 224 A2

Xerox Copy Centre

# SEMICONDUCTOR DISK DEVICE USEFUL IN TRANSACTION PROCESSING SYSTEM

## BACKGROUND OF THE INVENTION

### Field of the Invention

The present invention relates to a semiconductor disk device for storing data which utilizes semiconductor memory cells as storage medium and, more particularly, to such a semiconductor disk device which is especially suitable for being incorporated in a transaction processing system.

### Description of the Background Art

Recently, a semiconductor disk device utilizing semiconductor memory cells as storage medium for storing data has been developed as an exterior memory device for an information processing system, to be used in a manner of a conventional magnetic disk device. This semiconductor disk device has the advantage of being capable of realizing high speed real time accesses and large capacities.

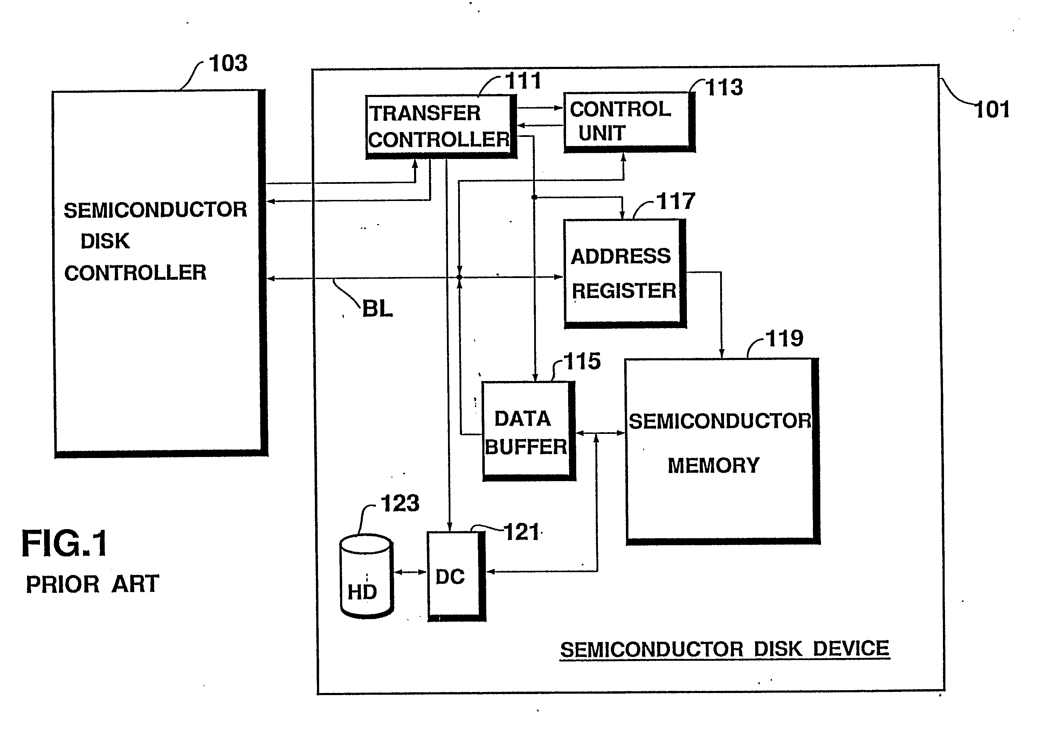

A configuration of such a conventional semiconductor disk device is shown in Fig. 1 along with a semiconductor disk controller associated with it. In Fig. 1, data are transmitted through a bus line BL connecting the semiconductor disk device 101 and the semiconductor disk controller 103. In writing data into the semiconductor disk device 101, data coming through the bus line BL are directed by a transfer controller 111 to be temporarily stored in a data buffer 115, then a control unit 113 controls an address register 117 to specify addresses in a semiconductor memory 119 at which the data are to be stored, and finally the data which has temporarily been stored in the data buffer 115 are stored at the specified addresses in the semiconductor memory 119. On the other hand, in reading the data out of the semiconductor disk device 101, the control unit 113 controls the address register 117 to specify addresses in the semiconductor memory 119 at which the data to be read out are stored, then the data are temporarily stored in the data buffer 115, and finally the data are directed by the transfer controller 111 to be transmitted from the data buffer 115 through the bus line BL to the semiconductor disk controller 103.

In addition, the semiconductor disk device 101 may also incorporate a hard disk device(HD) 123 utilizing non-volatile magnetic memories as storage medium and a disk controller(DC) 121 for controlling data transmission between the hard disk device 123 and the semiconductor memory 119, for the purpose of automatic retrieval of the data stored in the semiconductor memory 119 in a case of emergency such as a power outage. Such a protection against the power outage may not be needed in a system dealing only with a temporary files.

This semiconductor disk device 101 can be used, for example, in a so called transaction processing system, which is often utilized for an on-line banking machine system, as a master data file for a host system which is connected with a multiplicity of terminal systems through communication lines. In a transaction processing system, the data stored in the master data file of the host system can be updated or inspected from the terminal systems.

Now, in such a transaction processing system, it is indispensable to maintain the so called atomicity of the transactions. Namely, in the transaction processing system, a group of processings required by a transaction must either be all performed in completely normal manners or else be all ignored completely as if the transaction did not exist, in order to maintain the consistency among the data in the master data file. Thus, when a transaction is terminated as a result of an abnormality occurred in a certain processing, all the changes made on the data in the master data file by the other processings prior to this occurrence of abnormality and the subsequent termination of the transaction must be corrected to restore the state of the master data file before this transaction which is to be cancelled.

For this purpose, an information called journal information is utilized in the transaction processing system, which is generated whenever a writing of the data takes place. Each journal information contains values of the data at a certain address before and after the latest writing, so that the original value of the data can be recovered whenever necessary.

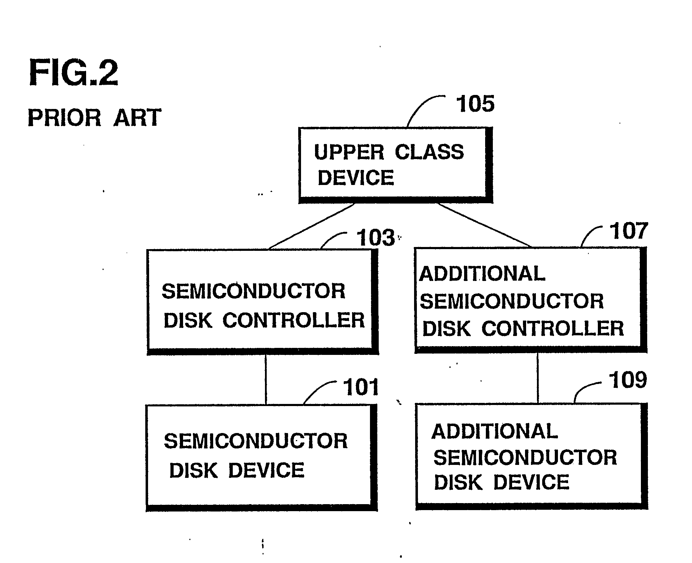

This feature of the transaction processing system concerning journal informations has been facilitated conventionally as in Fig. 2, which shows the semiconductor disk device 101 and the semiconductor disk controller 103 connected to an upper class device 105, as a database for this upper class device 105. In addition, the upper class device 105 is also connected with an additional semiconductor disk device 109 and an additional semiconductor disk controller 107 associated with it, which are substantially the same as the semiconductor disk device 101 and the semiconductor disk controller 103, and which are to be utilized for storing the journal informations generated by the upper class device 105 whenever the writing of data takes place in the semiconductor disk device 101.

However, such a conventional manner of dealing with the journal informations has a problem in that the upper class device 105 have to be used to generate the journal informations which requires the presence in the upper class device 105 of the program for the generation of the journal informations which is not easily made to be compatible with the other programs, and the memory which is exclusively devoted for this purpose which causes reduction of the capacity of the upper class device 105.

Furthermore, for a so called supervisor call processing in which privileged commands bestowed with superior priorities are used, or for a so called channel program processing which is to be carried out independent of a central processor, the processing time tends to increase as a result of waiting required, so that a so called turnaround time for a transaction which is a time taken for the transaction to be completed tended to be longer.

## SUMMARY OF THE INVENTION

It is therefore an object of the present invention to provide a semiconductor disk device capable of reducing the turnaround time for the transaction, and thereby improving the capability of the system in which it is to be utilized.

According to one aspect of the present invention there is provided a semiconductor disk device, comprising:
semiconductor memory means for storing data: and means for generating a journal information when new data to be stored in the semiconductor disk device are written in particular addresses in the semiconductor memory means, the journal information including the new data and old data which have originally been stored in these particular addresses in the semiconductor memory means before the new data are written.

According to another aspect of the present invention there is provided a semiconductor disk device, comprising:
semiconductor memory means for storing data: buffer means for temporarily storing data to be stored in the semiconductor disk device when the data are entered into the semiconductor disk device; and means for generating a journal information when new data to be stored in the semiconductor disk device are written in particular addresses in the semiconductor memory means, the journal information including the new data and old data which have originally been stored in these particular addresses in the semiconductor memory means before the new data are written.

Other features and advantages of the present invention will become apparent from the following description taken in conjunction with the accompanying drawings.

## BRIEF DESCRIPTION OF THE DRAWINGS

Fig. 1 is a block diagram of a conventional semiconductor disk device and a semiconductor disk controller associated with it.

Fig. 2 is a schematic block diagram of a conventional system using the semiconductor disk device of Fig. 1, which is capable of utilizing journal informations.

Fig. 3 is a block diagram of one embodiment of a semiconductor disk device according to the present invention and a semiconductor disk controller associated with it.

Fig. 4 is a diagrammatic illustration of a journal information to be utilized in the system of Fig. 4.

Fig. 5 is a schematic block diagram of a system using the semiconductor disk device of Fig. 2, which is capable of utilizing journal informations.

Fig. 6 is a timing chart for an example of read/write cycle of a dynamic random access memory that can be utilized in the semiconductor disk device of Fig. 4.

## DETAILED DESCRIPTION OF THE PREFERRED EMBODIMENTS

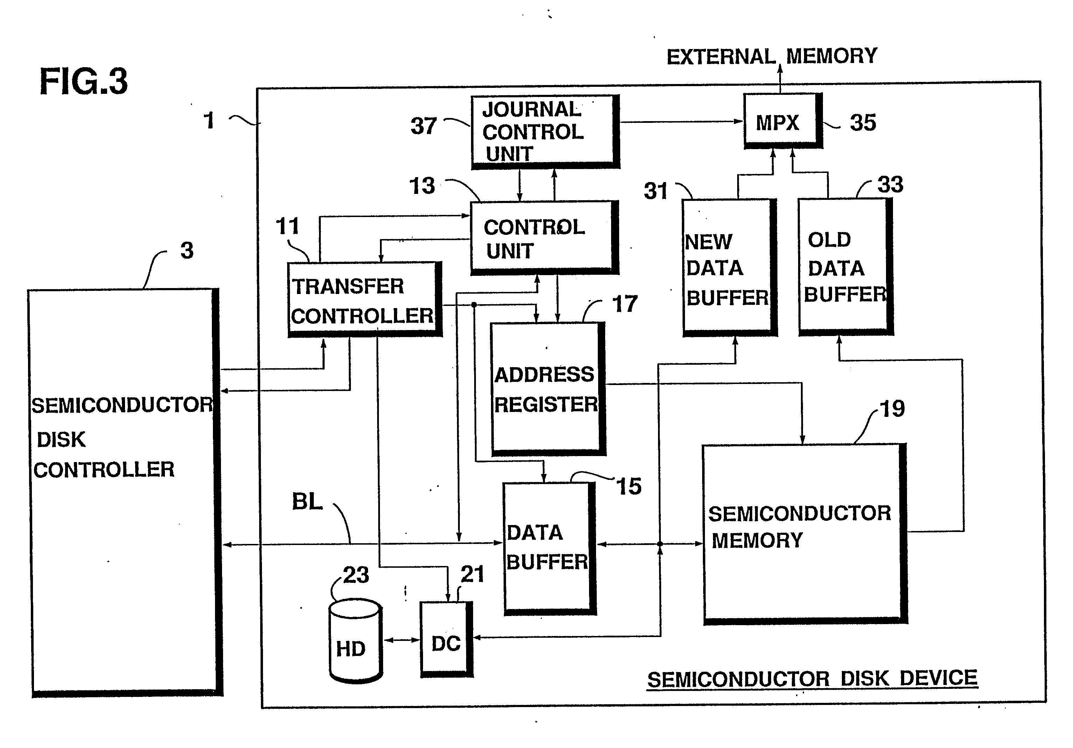

Referring now to Fig. 3, there is shown one embodiment of a semiconductor disk device according to the present invention along with a semiconductor disk controller associated with it.

In this embodiment, the semiconductor disk device 1 comprises a transfer controller 11, a control unit 13, a data buffer 15, an address register 17, a semiconductor memory 19, a disk controller(DC) 21, and a hard disk device(HD) 23, all of which have substantially equivalent physical structures to those of the corresponding elements in a conventional semiconductor disk device of Fig. 1. In addition, the semiconductor disk device 1 of this embodiment further comprises a new data buffer 31, old data buffer 33, a multiplexer(MPX) 35, and a journal control unit 37, which are not present in a conventional semiconductor disk device of Fig. 1.

The transfer controller 11 controls data transmission through a bus line BL between the semiconductor disk controller 3 and the semiconductor memory 19, and is directly connected with the semiconductor disk controller 3 control unit 13, data buffer 15, address register 17, and disk controller 21, for this purpose.

The control unit 13 controls operations of writing and reading of data in and out of the semiconductor disk device 1 by means of its microcomputer and prescribed programs for these operations stored in its internal memory, and is directly connected with the transfer controller 11, data buffer 15, address register 17, and journal control unit 37 for this purpose.

The data buffer 15 temporarily stores data to be transferred between the semiconductor disk device 1 and the semiconductor disk controller 3, and is directly connected with the transfer controller 11, control unit 13, semiconductor memory 19, semiconductor disk controller 3 through the bus line BL, and new data buffer 31.

The address register 17 generates addresses in the semiconductor memory 19 when data are to be written in or read out of the semiconductor memory 19, in accordance with the controlling by the transfer controller 11 and the control unit 13, and is directly connected with the transfer controller 11, control unit 13, and semiconductor memory 19.

The semiconductor memory 19 comprises a multiplicity of volatile semiconductor memory cells for storing data which are entered into the semiconductor disk device 1 through the semiconductor disk controller 3, and is directly connected with the data buffer 15, address register 17, disk controller 21, new data buffer 31, and old data buffer 33.

The disk controller 21 controls data transmission between the semiconductor memory 19 and the hard disk device 23, and is directly connected with the transfer controller 11, semiconductor memory 19, and the hard disk device 23, for this purpose.

The hard disk device 23 comprises non-volatile magnetic memories for storing data which are stored in the semiconductor memory 19 for the purpose of automatically retrieving the data in the semiconductor memory 119 in a case of emergency such as a power outage, and is connected through the disk controller 21 with the semiconductor memory 19.

The new data buffer 31 temporarily stores newest data to be written into the semiconductor memory 19 and feeds these newest data to the multiplexer 35, and is directly connected with the data buffer 15 and the multiplexer 35 for these purposes.

The old data buffer 33 temporarily stores latest data which are stored in the semiconductor memory 19 at addresses into which the newest data to be stored in the semiconductor memory 19 are going to be written and feeds these latest data to the multiplexer 35, and is directly connected with the semiconductor memory 19 and multiplexer 35 for these purposes.

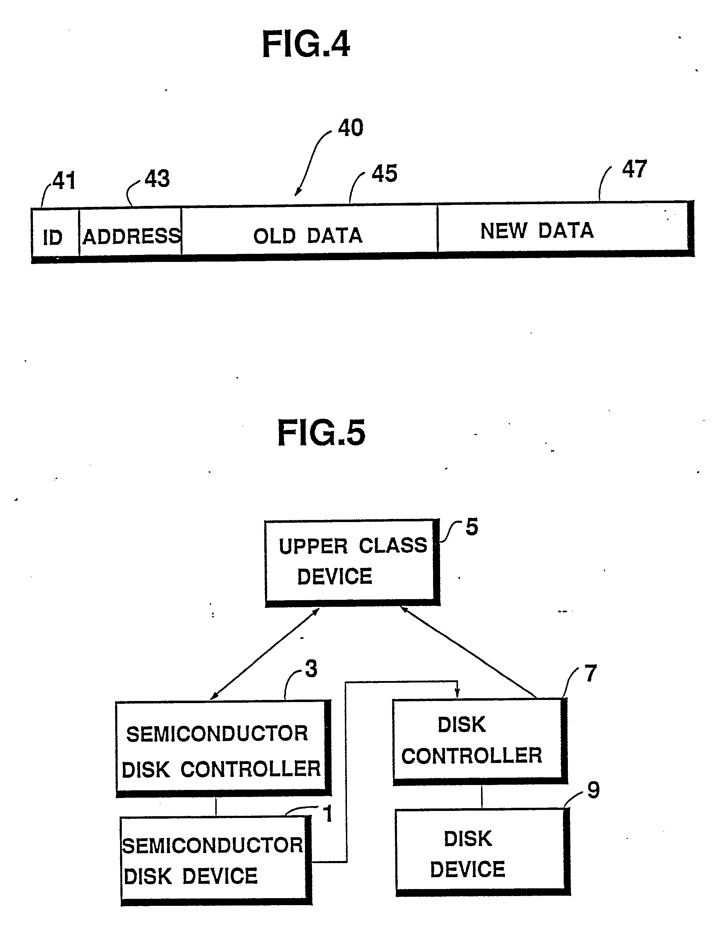

The multiplexer 35 generates journal informations from the newest data and the latest data given by the new data buffer 31 and the old data buffer 33 in accordance with the controlling by the journal control unit 37, and is directly connected with the new data buffer 31, old data buffer 33, and journal control unit 37, for this purpose. More specifically, this multiplexer 35 generates, for each data to be changed, the journal information 40 in a serial data form shown in Fig. 4 which comprises an identification label(ID) 41 for distinguishing individual journal information, an address 43 which is a top address of the addresses of the data in the semiconductor memory 19, an old data 45 which is the latest data from the old data buffer 33, and a new data 47 which is the newest data from the new data buffer 31.

The journal control unit 37 controls generation of the journal informations by the multiplexer 35 in accordance with the controlling by the control unit 13 and a prescribed program for this operation stored in its internal memory, and is directly connected with the control unit 13 and multiplexer 35 for this purpose. This controlling of the multiplexer 35 by the journal control unit 37 includes the prohibition of the generation of the journal information for a case in which it is not necessary to generate the journal information.

The journal informations generated by the multiplexer 35 are given to an external memory device provided for the purpose of storing the journal informations. For example, the semiconductor disk device 1 can be incorporated into a system shown in Fig. 5 in which the semiconductor disk device 1 is connected through the semiconductor disk controller 3 with an upper class device 5, to serve as a master data file for this upper class device 5. In this system of Fig. 5, the semiconductor disk device 1 is also connected with a disk device 9 provided for the purpose of storing the journal informations generated by the multiplexer 35, through a disk controller 7 for controlling this disk device 9. The disk device 9 is also connected with the upper class device 5 through the disk controller 7 so that the journal informations stored in the disk device 9 are accessible from the upper class device 5.

The various operations of this semiconductor disk device 1 are carries out as follows.

In reading the data out of the semiconductor disk device 1, the control unit 13 controls the address register 17 to specify addresses in the semiconductor memory 19 at which the data to be read out are stored, then the data at these specified adresses are temporarily stored in the data buffer 15, and finally the data in the data buffer 15 are directed by the transfer controller 11 to be transmitted from the data buffer 15 through the bus line BL to the semiconductor disk controller 3.

On the other hand, in writing data into the semiconductor disk device 1, data coming through the bus line BL are directed by a transfer controller 11 to be temporarily stored in the data buffer 15, then the control unit 13 controls the address register 17 to specify addresses in a semiconductor memory 19 at which the data are to be stored. These addresses specified by the address register 17 are then given to the semiconductor memory 19, and the data stored at these addresses are read out to the old data buffer 33 to be temporarily stored there. Then, the data temporarily stored in the data buffer 15 are stored at the specified addresses in the semiconductor memory 19 and at the same time given to the new data buffer 31 to be temporarily stored there. Finally, the multiplexer 35 generates a journal information 40 of the form shown in Fig. 4 from the newest data and the latest data given by the new data buffer 31 and the old data buffer 33 in accordance with the controlling by the journal control unit 37, as described above, and feeds this journal information 40 to the disk device 9 through the disk controller 7.

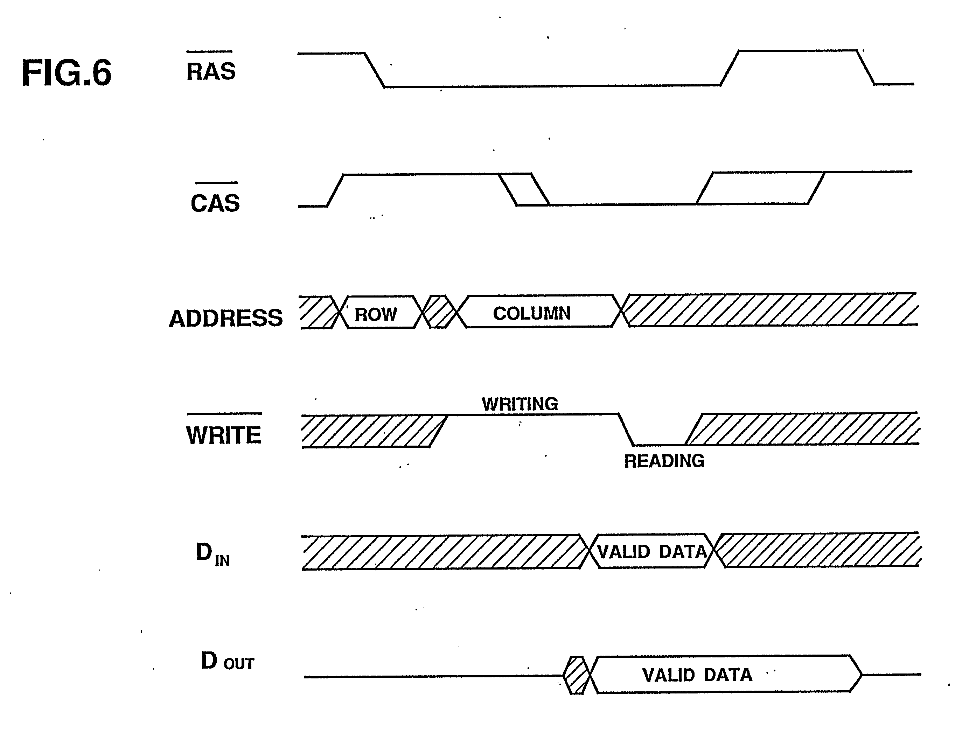

In this writing operation, the semiconductor memory 19 performs a sequence of the reading the old data out to the old data buffer 33 and the writing of the new data from the data buffer 15. This can conveniently be implemented by using a dynamic random access memory (DRAM) for the semiconductor memory 19. A typical read/write cycle for the dynamic random access memory is shown in Fig. 6 in which row and column of the address are sequentially given under the control by clock signals $\overline{RAS}$ and $\overline{CAS}$, and reading out a valid data as an output data $D_{OUT}$ and writing in a valid data as an input data $D_{IN}$ are sequentially performed under the control by $\overline{WRITE}$ signal, which can readily be applied to the performance by the semiconductor memory 19 in the reading operation described above.

Thus, in this embodiment, the writing of new data into the semiconductor memory 19 of the semiconductor disk device 1 is accompanied by the simultaneous generation of the corresponding journal information by the semiconductor disk device 1 itself, so that when incorporated in a transaction processing system, it is possible to reduce the turnaround time for the transaction because the upper class device 5 does not need to carry out the generation of the journal informations, and so the overall capability of the transaction processing system can substantially be improved.

It is to be noted that the disk device 9 in this embodiment may be a magnetic disk device, another semiconductor disk device, or any other memory device.

Besides this, many modifications and variations of the above embodiment may be made without departing from the novel and advantageous features of the present invention. Accordingly, all such modifications and variations are intended to be included within the scope of the appended claims.

Reference signs in the claims are intended for better understanding and shall not limit the scope.

## Claims

1. A semiconductor disk device, comprising:
semiconductor memory means(19) for storing data;
characterized by further comprising:
means(31, 33, 35, 37) for generating a journal information when new data to be stored in the semiconductor disk device are written in particular addresses in the semiconductor memory means(19), the journal information including the new data and old data which have originally been stored in these particular addresses in the semiconductor memory means(19) before the new data are written.

2. The semiconductor disk device of claim 1, wherein the generating means(31, 33, 35, 37) includes:
new data buffer means (31) for temporarily storing the new data;
old data buffer means(33) for temporarily storing the old data; and
multiplexer means(35) for generating the journal information from the new data in the new data buffer means(31) and the old data in the old data buffer means(33).

3. The semiconductor disk device of claim 2, wherein the generating means(31, 33, 35, 37) further includes means(37) for controlling the generation of the journal information by the multiplexer means(35) by utilizing a prescribed program for the generation of the journal information.

4. The semiconductor disk device of claim 3, wherein the controlling by the controlling means(37) includes prohibition of the generation of the journal information by the multiplexer means(35).

5. A semiconductor disk device, comprising:
semiconductor memory means(19) for storing data:
and buffer means(15) for temporarily storing data to be stored in the semiconductor disk device when the data are entered into the semiconductor disk device;
characterized by further comprising:
means(31, 33, 35, 37) for generating a journal information when new data to be stored in the semiconductor disk device are written in particular addresses in the semiconductor memory means(19), the journal information including the new data and old data which have originally been stored in these particular addresses in the semiconductor memory means(19) before the new data are written.

6. The semiconductor disk device of claim 5, wherein the generating means(31, 33, 35, 37) includes:
new data buffer means(31) for temporarily storing the new data;
old data buffer means(33) for temporarily storing the old data; and
multiplexer means(35) for generating the journal information from the new data in the new data buffer means(31) and the old data in the old data buffer means(33).

7. The semiconductor disk device of claim 6, wherein the generating means(31, 33, 35, 37) further includes means(37) for controlling the generation of the journal information by the multiplexer means (35) by utilizing a prescribed program for the generation of the journal information.

8. The semiconductor disk device of claim 7, wherein the controlling by the controlling means-(37) includes prohibition of the generation of the journal information by the multiplexer means(35).

103
SEMICONDUCTOR DISK CONTROLLER
111
TRANSFER CONTROLLER
113
CONTROL UNIT
101
117
ADDRESS REGISTER
BL
119
115
DATA BUFFER
SEMICONDUCTOR MEMORY
123
121
HD
DC
SEMICONDUCTOR DISK DEVICE

FIG.1
PRIOR ART

UPPER CLASS DEVICE
105
SEMICONDUCTOR DISK CONTROLLER
103
SEMICONDUCTOR DISK DEVICE
101
ADDITIONAL SEMICONDUCTOR DISK CONTROLLER
107
ADDITIONAL SEMICONDUCTOR DISK DEVICE
109

FIG.2
PRIOR ART

FIG.3
EXTERNAL MEMORY
1
JOURNAL CONTROL UNIT
37
MPX
35
13
CONTROL UNIT
31
33
11
NEW DATA BUFFER
OLD DATA BUFFER
3
TRANSFER CONTROLLER
17
ADDRESS REGISTER
SEMICONDUCTOR DISK CONTROLLER
19
15
BL
DATA BUFFER
SEMICONDUCTOR MEMORY
23
21
HD
DC
SEMICONDUCTOR DISK DEVICE

FIG.4

40
41
43
45
47
ID
ADDRESS
OLD DATA
NEW DATA

FIG.5

UPPER CLASS DEVICE
5
3
7
SEMICONDUCTOR DISK CONTROLLER
DISK CONTROLLER
9
1
SEMICONDUCTOR DISK DEVICE
DISK DEVICE

FIG.6
RAS
CAS
ADDRESS
ROW
COLUMN
WRITE
WRITING
READING
D IN
VALID DATA
D OUT
VALID DATA